# FASCICULE DE BREVET EUROPEEN

(11) **EP 3 160 787 B1**
(45) Date de publication et mention de la délivrance du brevet: **15.08.2018**
(21) Numéro de dépôt: 15733848.4
(22) Date de dépôt: 19.06.2015
(51) Int. Cl.: B60K 11/08

(54) **FACE AVANT DE VEHICULE AUTOMOBILE AVEC ENTREE D'AIR CENTRALE ET SORTIES LATERALES**
FRONTFLÄCHE EINES KRAFTFAHRZEUGES MIT ZENTRALEM LUFTEINLASS UND SEITLICHEN AUSLÄSSEN
MOTOR VEHICLE FRONT SURFACE WITH CENTRAL AIR INLET AND SIDE OUTLETS

(30) Priorité: 27.06.2014 FR 1456050
(43) Date de publication de la demande: 03.05.2017
(73) Titulaire: Compagnie Plastic Omnium, 69007 Lyon (FR)
(72) Inventeur: GILOTTE, Philippe, 01470 Benonces (FR); STRUSS, Martin, 84103 Bratislava (SK)
(74) Mandataire: Andrieux, Benoît
(86) Numéro de dépôt international: PCT/FR2015/051627
(87) Numéro de publication internationale: WO 2015/197952

(56) Documents cités:
- EP-A1- 0 175 655
- DE-A1- 10 159 783
- DE-A1-102008 022 554
- DE-A1-102012 111 274
- FR-A1- 2 904 950
- JP-A- 2005 178 427
- JP-A- 2008 049 815
- JP-U- S61 149 727

## Description

La présente invention concerne une face avant pour véhicule automobile, en particulier du type comportant des entrées d'air permettant de refroidir le moteur du véhicule.

On appelle face avant pour véhicule automobile, un ensemble de composants situés en avant des refroidisseurs d'air, comportant au moins le parechoc.

Une face avant peut en outre comporter : des éléments de choc (absorbeurs), une poutre, des éléments de carénage, des éléments de conduite d'air, des ailes avant, un pare boue (arche de roue)...

On connaît des faces avant de véhicules comportant des entrées d'air de refroidissement qui sont prévues à l'avant des véhicules automobiles pour en refroidir le moteur. L'entrée d'air de refroidissement est quelquefois ornementée d'une grille qui joue un rôle purement esthétique.

En général, le refroidissement s'opère par l'intermédiaire d'un échangeur air/liquide de refroidissement, également désigné radiateur, et/ou d'un refroidisseur d'air de suralimentation, appelé aussi en abrégé RAS,

Ces deux dispositifs doivent être alimentés par un flux d'air provenant de l'extérieur pour assurer leur fonction de refroidissement.

Le radiateur est généralement alimenté au moyen d'une entrée d'air de refroidissement centrale, alors que le RAS est généralement alimenté au moyen d'une entrée d'air de refroidissement latérale en face avant du parechoc.

Cependant, il a été démontré que ces entrées d'air de refroidissement, centrale et latérales, pouvaient être néfastes au coefficient de pénétration (de trainée) Cx du véhicule.

Pour permettre une réduction du coefficient de pénétration Cx, tout en conservant les entrées d'air de refroidissement, il est connu d'équiper latéralement la face avant d'entrées d'air aérodynamiques, de façon à diriger le flux d'air arrivant sur la face avant, vers des parties latérales du parechoc pour ressortir au niveau des roues avant du véhicule.

Cependant, ces entrées d'air aérodynamiques, permettant d'améliorer le flux d'air autours du véhicule pour améliorer l'aérodynamisme du véhicule, n'ont qu'un faible impact sur le coefficient de pénétration Cx, car les pressions exercées sur les parties latérales de la face avant sont moindre que la pression exercée en partie centrale. Toutefois, l'air entrant en partie centrale est utilisé pour le refroidissement du moteur. DE 10 2008 022 554 décrit une face avant selon le préambule de la revendication 1. L'invention a pour but de fournir à une face avant de véhicule, un moyen alternatif et amélioré pour réduire le coefficient de pénétration Cx, tout en optimisant l'entrée d'air en face avant. Pour ce faire, la face avant selon l'invention comporte des moyens permettant d'utiliser l'air provenant de l'entrée d'air centrale pour l'orienter vers des parties latérales telles que les roues. Ainsi, l'impact défavorable sur le coefficient de pénétration Cx de la forte pression de l'air récupéré dans la partie centrale de la face avant est réduit.

Ainsi, l'objet de l'invention concerne une face avant selon la revendication 1. Grâce à ce système, on diminue fortement l'impact sur le coefficient de pénétration Cx de la forte pression de l'air récupéré dans la partie centrale, grâce au moyen d'amenée d'air latéral, et le clapet permet de gérer conjointement les nécessités de refroidissement et les nécessités d'aérodynamisme.

Selon l'invention, le premier clapet peut être situé à l'intersection entre le moyen d'amenée d'air central et le moyen d'amenée d'air latéral, de façon à ce que lorsque le premier clapet est fermé, l'air venant du moyen d'amenée central ne peut pénétrer dans le moyen d'amenée d'air latéral.

Selon l'invention, le moyen d'amenée d'air central est muni d'un obturateur pour empêcher l'air entré par une entrée d'air centrale de quitter le moyen d'amenée d'air central vers le moteur du véhicule. Lorsque le premier clapet est fermé, l'obturateur est ouvert, et inversement, lorsque le premier clapet est ouvert, l'obturateur est fermé.

Le moyen d'amenée d'air latéral peut comporter au moins un second clapet, situé entre le premier clapet et une sortie d'air latéral, une fermeture du second clapet permettant de diriger l'air vers le moteur du véhicule.

Selon un mode de réalisation, la face avant comporte au moins une entrée d'air latérale située entre le premier clapet et le second clapet, et permettant à l'air extérieur au véhicule de pénétrer directement dans le moyen d'amenée d'air latéral pour refroidir un refroidisseur d'air de suralimentation.

Selon un autre mode de réalisation, la face avant comporte au moins une entrée d'air latérale située entre le second clapet, et la sortie d'air latéral, et permettant à l'air extérieur au véhicule de pénétrer directement dans le moyen d'amenée d'air latéral afin d'améliorer l'aérodynamisme du véhicule.

Selon l'invention, la face avant peut comporter au moins une entrée d'air latérale permettant à l'air extérieur au véhicule de pénétrer directement dans le moyen d'amenée d'air latéral, ladite entrée étant munie d'une écope permettant de diriger une quantité d'air choisie vers la sortie d'air latérale du véhicule, ou vers le refroidisseur d'air de suralimentation.

Le moyen d'amenée d'air central et le moyen d'amenée d'air latéral peuvent constituer deux pièces en matière plastique fixées l'une à l'autre de façon à éviter toute fuite d'air au niveau de la liaison.

Le moyen d'amenée d'air central et le moyen d'amenée d'air latéral peuvent constituer une même pièce en matière plastique.

Le moyen d'amenée d'air central et/ou le moyen d'amenée d'air latéral peuvent constituer des caissons.

Selon l'invention, la face avant peut comporter une peau destinée à être visible de l'extérieur du véhicule, et dans laquelle au moins un caisson est fermé au moyen de la paroi interne de la peau.

L'invention concerne également un véhicule comportant une face avant selon l'invention.

L'invention sera mieux comprise à la lecture des figures annexées, qui sont fournies à titre d'exemples et ne présentent aucun caractère limitatif, dans lesquelles :
- La figure 1 illustre un mode de réalisation d'une face avant d'un véhicule automobile selon l'invention.
- La figure 2 illustre un mode de réalisation d'un dispositif de gestion des flux d'air selon l'invention.
- Les figures 3A à 3D illustrent des configurations différentes d'ouverture et fermeture de clapets et d'obturateur d'un dispositif de gestion des flux d'air selon l'invention.
- Les figures 4A à 4C illustrent des configurations différentes d'ouverture et a fermeture d'une écope d'un mode de réalisation particulier d'un dispositif de gestion des flux d'air selon l'invention.

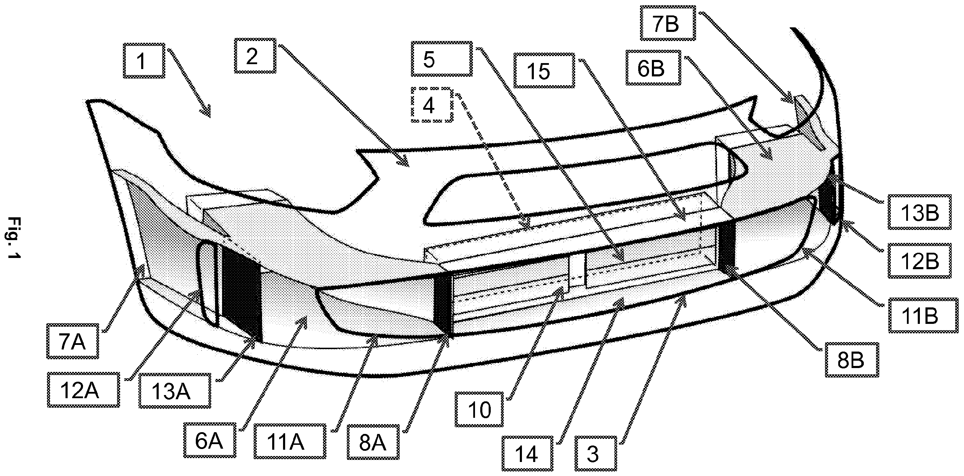

On se réfère maintenant à la figure 1 qui illustre un mode de réalisation de la face avant (1) d'un véhicule automobile selon l'invention.

La face avant (1) comporte une peau de parechoc (2) destinée à être visible de l'extérieur du véhicule, et un dispositif de gestion des flux d'air.

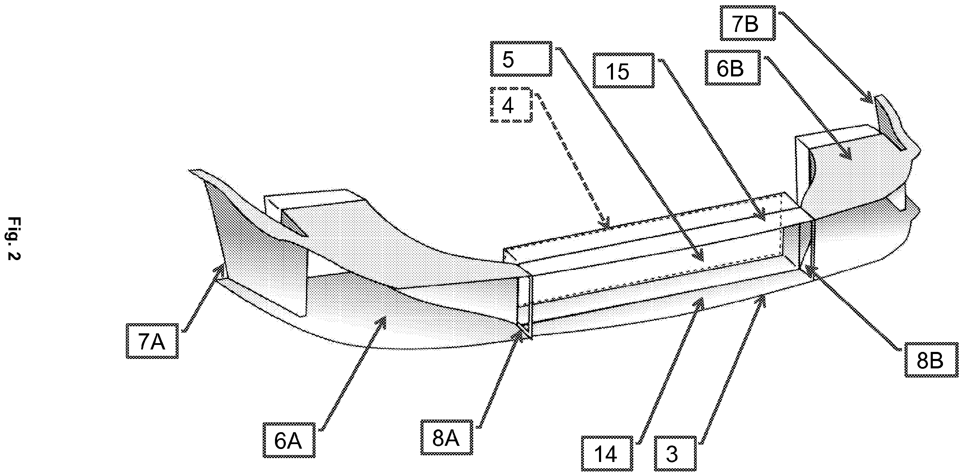

On se réfère maintenant à la figure 2 qui illustre un mode de réalisation de dispositif de gestion des flux d'air. Le dispositif comporte une entrée d'air centrale (3) ménagée en partie centrale de la peau (2) permettant à l'air extérieur au véhicule de pénétrer dans un moyen d'amenée d'air central (5) aménagé derrière ladite face.

Le moyen d'amenée d'air central (5) est relié latéralement a au moins un moyen d'amenée d'air latéral (6A) aménagé derrière ladite face et conduisant l'air de la partie centrale (5) vers au moins une partie latérale du véhicule. Selon le mode de réalisation de la figure 1, la partie latérale peut être une sortie d'air latérale (7A) du véhicule, ou un refroidisseur d'air de suralimentation (RAS).

De préférence, comme illustré sur la figure 2, la face avant (1) comporte deux moyens d'amenée d'air latéral (6A, 6B). Chacun conduisant l'air de la partie centrale (5) vers au moins une sortie d'air latérale (7A et respectivement 7B) du véhicule.

Selon un mode de réalisation, les moyens d'amenée constituent des conduits.

Chaque conduit d'air latéral (6A, 6B) comporte un premier clapet (8A respectivement 8B) permettant de réguler le débit d'air circulant entre le conduit d'air central (5) et le conduit d'air latéral (6A, 6B).

Lorsque la face avant selon l'invention est montée sur le véhicule, l'entrée d'air centrale (3) fait face au radiateur, et au moins un des conduits d'air latéraux (6A, 6B) passent devant un refroidisseur d'air de suralimentation (RAS) lorsque le véhicule en comporte un, et les sorties d'air latérales (7A, 7B) débouchent au niveau des roues avant du véhicule.

L'utilisation d'une entrée d'air centrale (3) permet de récupérer l'air en partie centrale du parechoc, là où les pressions d'air aérodynamiques, en condition de roulage, sont les plus élevées.

Selon un mode de réalisation préférentiel, les premiers clapets (8A, 8B) sont situés à l'intersection entre le conduit d'air central (5) et les conduits d'air latéraux (6A respectivement 6B), de façon à ce que lorsque les premiers clapets (8A, 8B) sont fermés, l'air du conduit central (5) ne peut pas pénétrer dans les conduits latéraux (6A, 6B).

Le conduit d'air central (5) comporte une ouverture arrière (4) positionnée dans le prolongement de l'entrée d'air centrale (3), de façon à évacuer l'air entré dans le conduit d'air central (5) vers le moteur. Ainsi, l'air pénètre dans le conduit d'air central (5), puis dans le moteur au niveau du radiateur.

De façon préférentielle, le conduit d'air central (5) comporte un obturateur (10) au niveau de l'ouverture (4) face au radiateur. Cet obturateur (10) permet d'empêcher l'air entré dans le conduit d'air central de passer dans le compartiment moteur. L'obturateur (10) actionnable sur commande, permet de réduire ou de supprimer le flux d'air entrant lorsque le moteur, selon les configurations de roulage, n'a pas besoin d'être refroidi. Le document FR 2738779 fournit un exemple d'un tel obturateur, sous la forme d'un volet roulant.

Les premiers clapets (8A, 8B) sont commandés par une unité de commande (non représentée sur les figures) qui centralise également l'actionnement de l'obturateur (10).

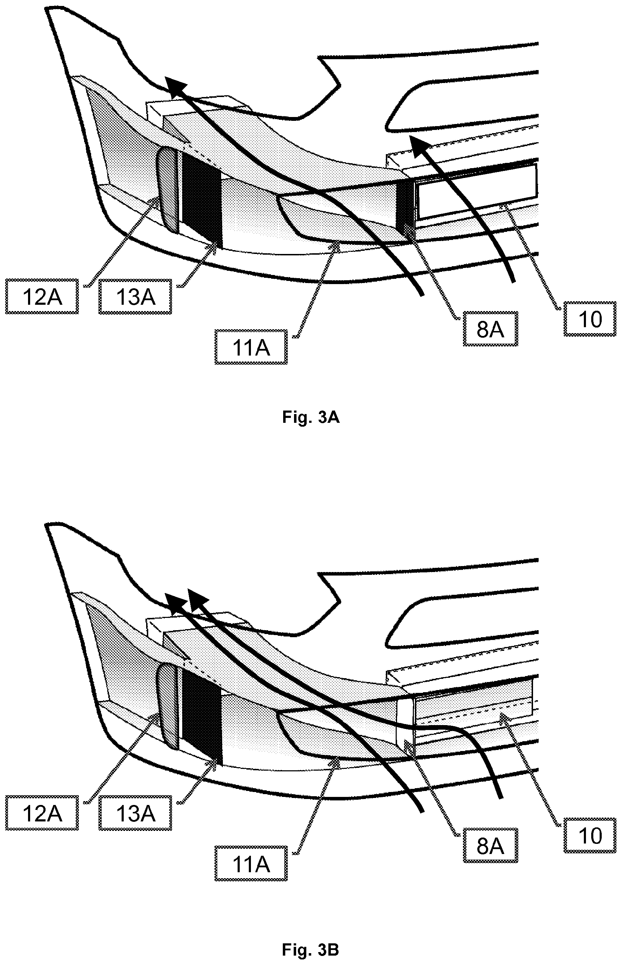

De façon préférentielle, lorsque les premiers clapets (8A, 8B) sont fermés, l'obturateur (10) est ouvert. De cette façon, l'air qui pénètre dans le conduit d'air central (5) ressort directement et intégralement par l'ouverture (4) face au radiateur, comme l'illustre la figure 3A.

Inversement, lorsque les premiers clapets (8A, 8B) sont ouverts, l'obturateur (10) est fermé. De cette façon, l'air qui pénètre dans le conduit d'air central (5) ressort intégralement par les conduits d'air latéraux (6A, 6B), comme l'illustre la figure 3B.

Selon un mode de réalisation, au moins un des conduits d'air latéral (6A, 6B) comporte une ouverture latérale (non représentée) sur sa face arrière, opposée à la peau (2), et faisant face au refroidisseur d'air de suralimentation. Ainsi, l'air circulant dans les conduits d'air latéraux (6A, 6B) peut atteindre le ou les refroidisseurs d'air de suralimentation (RAS).

De préférence, la face avant (1) selon l'invention comporte au moins une entrée d'air latérale, en général deux (11A, 11B), aménagée en partie centrale de la face (2) et permettant à de l'air extérieur au véhicule de pénétrer directement face au refroidisseur d'air de suralimentation (RAS). Ces entrées d'air (11A, 11B) sont des entrées d'air de refroidissement. La figure 3A illustre les flux d'air entrant par ces entrées d'air latérales lorsque les clapets (8A, 8B, 13A, 13B) sont fermés, et la figure 3B illustrent ces flux d'air lorsque seul le second clapet (13A, 13B) est fermé. Ces entrées (11A, 11B) peuvent être munies d'obturateurs pilotés.

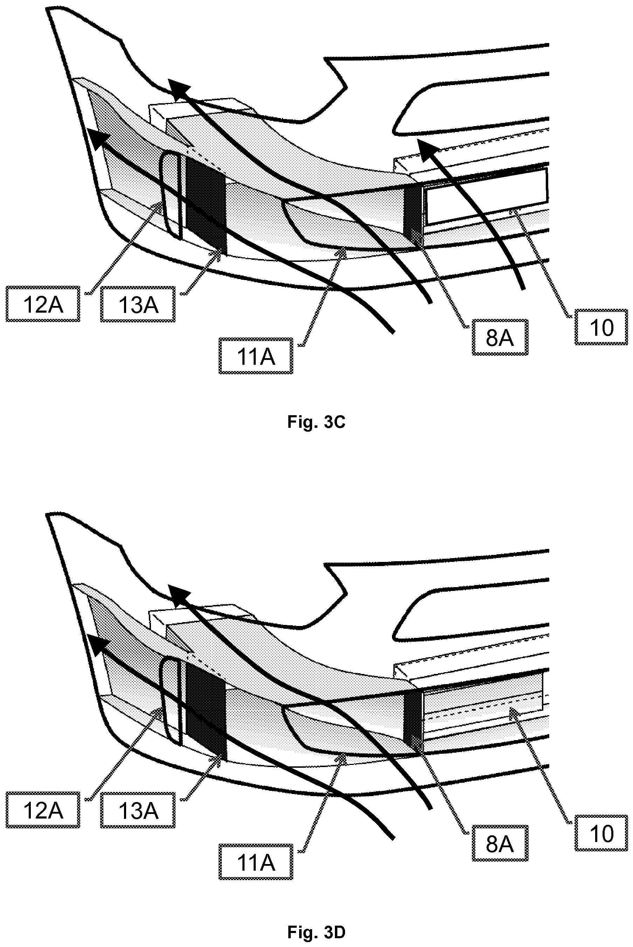

Selon un autre mode de réalisation, la face avant (1) comporte au moins une entrée d'air latéral, en général deux (12A, 12B) et aménagées de part et d'autre de l'entrée centrale (3) sur la peau (2), permettant à de l'air extérieur au véhicule de pénétrer directement dans les conduits d'air latéraux (6A, 6B), face aux sorties d'air latérales (7A, 7B). Ces entrées d'air latérales (12A, 12B) sont des entrées d'air aérodynamiques, comme l'illustrent les figures 3C et 3D. Ces entrées (12A, 12B) peuvent être munies d'obturateurs pilotés.

Selon ces configurations, qu'il y ait un ou deux refroidisseurs d'air de suralimentation (RAS), des conflits de flux peuvent apparaitre entre le flux entrant par l'entrée centrale (3), le ou les flux entrant par la ou les entrées d'air latérales de refroidissement (11A, 11B) ou aérodynamiques (12A, 12B).

Pour s'affranchir de ce problème, et optimiser le refroidissement du refroidisseur d'air de suralimentation (RAS), le conduit d'air latéral (6A, 6B) comporte de préférence un second clapet (13A, 13B), situé entre le premier clapet (8A, 8B) et la sortie d'air latéral (7A, 7B). Le premier et le second clapet (8A, 8B, 13A, 13B) forment, une fois fermés, un conduit permettant de guider l'air entrant par les entrées d'air latérales (11A, 11B) vers le moteur, et en particulier vers le refroidisseur d'air de suralimentation (RAS), comme l'illustre la figure 3C.

Les tableaux ci-dessous décrivent des configurations possibles des organes de contrôle des flux (obturateurs, clapets) en fonction des nécessités du véhicules.

| | **Configurations** | | | | |
|---|---|---|---|---|---|
| **Organe** | **1A** | **1B** | **1C** | **1D** | **1E** |
| **Obturateur 10** | Fermé | Fermé | Fermé | Fermé | Fermé |
| **Premier clapet 8A** | Fermé | Ouvert | Ouvert | Ouvert | Ouvert |
| **Entrée d'air latérale (refroid.) 11A** | Ouvert | Ouvert | Fermé | Ouvert | Fermé |
| **Second clapet 13A** | Fermé | Fermé | Fermé | Ouvert | Ouvert |
| **Entrée d'air latérale (aéro) 12A** | Fermé | Fermé | Fermé | Fermé | Fermé |

| | **Configurations** | | | | |
|---|---|---|---|---|---|
| **Organe** | **2A** | **2B** | **2C** | **2D** | **2E** |
| **Obturateur 10** | Fermé | Fermé | Fermé | Fermé | Fermé |
| **Premier clapet 8A** | Fermé | Ouvert | Ouvert | Ouvert | Ouvert |
| **Entrée d'air latérale (refroid.) 11A** | Ouvert | Ouvert | Fermé | Ouvert | Fermé |
| **Second clapet 13A** | Fermé | Fermé | Fermé | Ouvert | Ouvert |
| **Entrée d'air latérale (aéro) 12A** | Ouvert | Ouvert | Ouvert | Ouvert | Ouvert |

| | **Configurations** | | | | |
|---|---|---|---|---|---|
| **Organe** | **3A** | **3B** | **3C** | **3D** | **3E** |
| **Obturateur 10** | Ouvert | Ouvert | Ouvert | Ouvert | Ouvert |
| **Premier clapet 8A** | Fermé | Ouvert | Ouvert | Ouvert | Ouvert |
| **Entrée d'air latérale (refroid.) 11A** | Ouvert | Ouvert | Fermé | Ouvert | Fermé |
| **Second clapet 13A** | Fermé | Fermé | Fermé | Ouvert | Ouvert |
| **Entrée d'air latérale (aéro) 12A** | Fermé | Fermé | Fermé | Fermé | Fermé |

| | **Configurations** | | | | |
|---|---|---|---|---|---|
| **Organe** | **4A** | **4B** | **4C** | **4D** | **4E** |
| **Obturateur 10** | Ouvert | Ouvert | Ouvert | Ouvert | Ouvert |
| **Premier clapet 8A** | Fermé | Ouvert | Ouvert | Ouvert | Ouvert |
| **Entrée d'air latérale (refroid.) 11A** | Ouvert | Ouvert | Fermé | Ouvert | Fermé |
| **Second clapet 13A** | Fermé | Fermé | Fermé | Ouvert | Ouvert |
| **Entrée d'air latérale (aéro) 12A** | Ouvert | Ouvert | Ouvert | Ouvert | Ouvert |

On peut ainsi privilégier le refroidissement du radiateur, ou du refroidisseur d'air de suralimentation (RAS), ou l'aérodynamisme du véhicule.

Les figures 3A à 3D illustrent quelques-unes de ces configurations, dans lesquelles un clapet est représenté en gris lorsqu'il est fermé et en blanc lorsqu'il ouvert :
- La figure 3A illustre la configuration 3A.
- La figure 3B illustre la configuration 1B.
- La figure 3C illustre la configuration 4A
- La figure 3D illustre la configuration 2A

Chacun des organes de contrôle des flux (obturateur, clapets...) est piloté par une unité de commande.

Cette unité de commande reçoit des informations de différents capteurs, tels que des sondes. Puis, en fonction de ces informations (la température du radiateur par exemple), l'unité va décider de diriger les flux de la façon la plus appropriée pour : favoriser le refroidissement du radiateur, et/ou du refroidisseur d'air de suralimentation (RAS), ou favoriser l'aérodynamisme du véhicule.

Pour ce faire, l'unité de commande pilote les clapets, par exemple par pivotement autour d'un axe vertical situé sur l'un des bords des clapets.

Le dispositif de gestion de l'air de la face avant selon l'invention comporte donc au moins :
- un moyen d'amenée d'air central (5) comportant :
   ∘ une ouverture (4) positionnée en face de l'entrée d'air centrale (3) pour mener l'air jusqu'au radiateur.
   ∘ Une paroi inférieure (14)
   ∘ Une paroi supérieure (15)
- un moyen d'amenée d'air latéral (6A, 6B) ;

Le moyen d'amenée d'air central (5) peut constituer un caisson défini par une paroi inférieure, une paroi supérieure, une ouverture arrière (vers le radiateur) portant l'ouverture (4), et une ouverture avant (vers l'entrée d'air).

De même, chaque moyen d'amenée d'air latéral (6A, 6B) peut constituer un caisson.

Les caissons sont de préférence fabriqués en matière plastique.

Les caissons latéraux (6A, 6B) sont fixés au caisson (5) par tout moyen étanche, de façon à éviter toute fuite d'air. Les caissons peuvent ainsi être collés, soudés ou surmoulés.

Les trois caissons (5, 6A et 6B) peuvent constituer une seule pièce, en matière plastique de préférence. Chaque caisson peut être constitué d'un assemblage de différentes parois. Certaines de ces parois formant le conduit du caisson peuvent être issues d'un autre élément de la face avant comme la paroi interne de la peau de parechoc, la FAT, un réservoir (lave-glace, lave-phare), un autre élément de carrosserie visible ou non (aile, soubassement/convergent, presseur, grille d'entrée d'air, enjoliveur ...), un absorbeur de choc.

Les caissons peuvent être fixés au parechoc de la face avant.

Par exemple un caisson (5, 6A, 6B) peut avoir une forme sensiblement en U, et la fermeture du caisson s'effectue au moyen de la paroi interne de la peau (2) du parechoc.

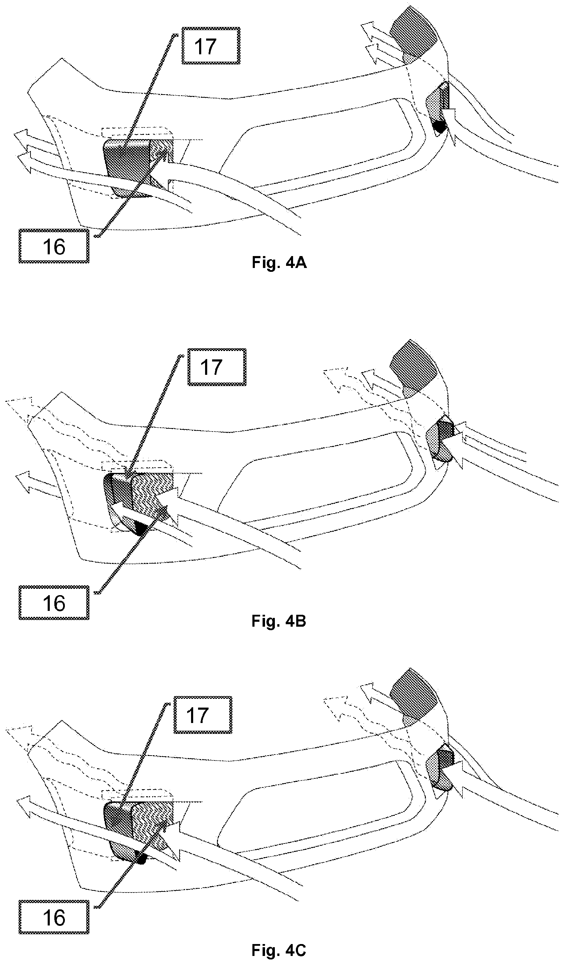

Selon un autre mode de réalisation (figures 4A, 4B et 4C), l'entrée d'air latérale de refroidissement (11A, 11B) et l'entrée d'air latéral aérodynamique (12A, 12B) sont combinées en une seule entrée d'air (16).

Pour préserver la possibilité de contrôler le flux d'air entrant, de façon à diriger cet air préférentiellement vers la sortie d'air latérale (7A), ou vers le refroidisseur d'air de suralimentation (RAS), cette entrée d'air (16) est munie d'une écope (17) pilotable par une unité de commande.

L'écope est dimensionnée de façon à ce qu'en position totalement rabattue, une ouverture subsiste, permettant de faire entrer de l'air dans le moyen d'amenée d'air latéral (6A).

L'écope est également dimensionnée de façon à ce qu'en position intermédiaire, entre une position totalement rabattue et une position totalement ouverte, il subsiste une ouverture de

En position totalement ouverte, elle permet d'envoyer tout l'air entrant par l'entrée (16) vers le refroidisseur d'air de suralimentation (RAS).

Cette écope (17) possède entre ces états totalement rabattu et ouvert, des états intermédiaires, permettant de contrôler finement la quantité d'air envoyée d'un côté ou de l'autre, et donc, de favoriser ou défavoriser le refroidissement ou l'aérodynamisme.

Ainsi l'écope (17) permet de diriger une quantité d'air choisie vers la sortie d'air latérale (7A) du véhicule, ou vers le refroidisseur d'air de suralimentation.

Les figures 4A à 4C illustrent quelques-unes de ces configurations :
- La figure 4A illustre une configuration dans laquelle l'écope (17) est totalement rabattue. Tout l'air s'évacue alors vers la sortie d'air latérale (7A) du véhicule, à travers le moyen d'amenée d'air latéral (6A) conduisant l'air.
- La figure 4B illustre une configuration dans laquelle l'écope (17) est partiellement ouverte, laissant une partie latérale non étanche. Un peu d'air s'évacue alors vers la sortie d'air latérale (7A), et la majorité de l'air entre directement face au refroidisseur d'air de suralimentation (RAS).
- La figure 4C illustre une configuration dans laquelle l'écope (17) est totalement ouverte. Tout l'air entre directement face au refroidisseur d'air de suralimentation (RAS), il n'y a pas d'air sortant vers la sortie d'air latérale (7A).

## Revendications

1. Face avant (1) de véhicule automobile comportant un moyen d'amenée d'air central (5), le moyen d'amenée d'air central (5) étant relié latéralement à au moins un moyen d'amenée d'air latéral (6A, 6B) conduisant l'air d'une partie centrale de la face avant (1) vers au moins une partie latérale (7A, 7B, RAS) du véhicule, la face avant (1) comportant au moins un clapet (8A, 8B) entre le moyen d'amenée d'air central (5) et le moyen d'amenée d'air latéral (6A, 6B), permettant de réguler un débit d'air circulant entre le moyen d'amenée d'air central (5) et le moyen d'amenée d'air latéral (6A, 6B), **caractérisé en ce que** la face avant est telle que ledit moyen d'amenée d'air central (5) est muni d'un obturateur (10) pour empêcher l'air entré par une entrée d'air centrale (3) de quitter le moyen d'amenée d'air central (5) vers le moteur du véhicule et que lorsque le premier clapet (8A, 8B) est fermé, l'obturateur (10) est ouvert, et inversement, lorsque le premier clapet (8A, 8B) est ouvert, l'obturateur(10) est fermé.

2. Face avant (1) selon la revendication 1, dans laquelle le premier clapet (8A, 8B) est situé à l'intersection entre le moyen d'amenée d'air central (5) et le moyen d'amenée d'air latéral (6A, 6B), de façon à ce que lorsque le premier clapet (8A, 8B) est fermé, l'air venant du moyen d'amenée central (5) ne peut pénétrer dans le moyen d'amenée d'air latéral (6A, 6B).

3. Face avant (1) selon l'une des revendications précédentes, dans laquelle le moyen d'amenée d'air latéral (6A, 6B) comporte au moins un second clapet (13A, 13B), situé entre le premier clapet (8A, 8B) et une sortie d'air latéral (7A, 7B), une fermeture du second clapet (13A, 13B) permettant de diriger l'air vers le moteur du véhicule.

4. Face avant (1) selon la revendication 3, comportant au moins une entrée d'air latérale (11A, 11B) située entre le premier clapet (8A, 8B) et le second clapet (13A, 13B), et permettant à l'air extérieur au véhicule de pénétrer directement dans le moyen d'amenée d'air latéral (6A, 6B) pour refroidir un refroidisseur d'air de suralimentation.

5. Face avant (1) selon l'une des revendications 3 et 4, comportant au moins une entrée d'air latérale (12A, 12B) située entre le second clapet (13A, 13B), et la sortie d'air latéral (7A, 7B), et permettant à l'air extérieur au véhicule de pénétrer directement dans le moyen d'amenée d'air latéral (6A, 6B) afin d'améliorer l'aérodynamisme du véhicule.

6. Face avant (1) selon l'une des revendications 1 à 3, comportant au moins une entrée d'air latérale (16) permettant à l'air extérieur au véhicule de pénétrer directement dans le moyen d'amenée d'air latéral (6A, 6B), ladite entrée (16) étant munie d'une écope (17) permettant de diriger une quantité d'air choisie vers la sortie d'air latérale (7A) du véhicule, ou vers le refroidisseur d'air de suralimentation.

7. Face avant (1) selon l'une des revendications précédentes, dans laquelle le moyen d'amenée d'air central (5) et le moyen d'amenée d'air latéral (6A, 6B) constituent deux pièces en matière plastique fixées l'une à l'autre de façon à éviter toute fuite d'air au niveau de la liaison.

8. Face avant (1) selon l'une des revendications 1 à 6, dans laquelle le moyen d'amenée d'air central (5) et le moyen d'amenée d'air latéral (6A, 6B) constituent une même pièce en matière plastique.

9. Face avant (1) selon l'une des revendications précédentes, dans laquelle le moyen d'amenée d'air central (5) et/ou le moyen d'amenée d'air latéral (6A, 6B) constituent des caissons.

10. Face avant (1) selon la revendication 9, comportant une peau (2) destinée à être visible de l'extérieur du véhicule, et dans laquelle au moins un caisson (5, 6A, 6B) est fermé au moyen de la paroi interne de la peau (2).

11. Véhicule comportant une face avant (1) selon l'une des revendications précédentes.

## Patentansprüche

1. Vorderseite (1) eines Kraftfahrzeugs mit einem zentralen Luftzufuhrmittel (5), wobei das zentrale Luftzufuhrmittel (5) seitlich mit mindestens einem seitlichen Luftzufuhrmittel (6A, 6B) verbunden ist, um Luft von einem zentralen Teil der Vorderseite (1) zu mindestens einem seitlichen Teil (7A, 7B, RAS) des Fahrzeugs zu führen,
wobei die Vorderseite (1) aufweist:
mindestens ein Ventil (8A, 8B) zwischen dem zentralen Luftzufuhrmittel (5) und dem seitlichen Luftzufuhrmittel (6A, 6B) zum Regeln eines Luftdurchflusses, der zwischen dem zentralen Luftzufuhrmittel (5) und dem seitlichen Luftzufuhrmittel (6A, 6B) strömt;
**dadurch gekennzeichnet, dass**
die Vorderfläche derart ist, dass das zentrale Luftzufuhrmittel (5) mit einem Verschluss (10) versehen ist, um zu verhindern, dass Luft, welche durch einen zentralen Lufteinlass (3) eingetreten ist, das zentrale Luftzufuhrmittel (5) hin zum Motor des Kraftfahrzeugs verlässt, und
wobei, wenn das erste Ventil (8A, 8B) geschlossen ist, der Verschluss (10) geöffnet ist, und umgekehrt, wenn das erste Ventil (8A, 8B) geöffnet ist, der Verschluss (10) geschlossen ist.

2. Vorderseite (1) eines Kraftfahrzeugs gemäß Anspruch 1, wobei das erste Ventil (8A, 8B) am Zusammenfluss zwischen dem zentralen Luftzufuhrmittel (5) und dem seitlichen Luftzufuhrmittel (6A, 6B) angeordnet ist, so dass, wenn das erste Ventil (8A, 8B) geschlossen ist, die Luft von dem zentralen Luftzufuhrmittel (5) nicht in das seitliche Luftzufuhrmittel (6A, 6B) eintreten kann.

3. Vorderseite (1) eines Kraftfahrzeugs gemäß einem der vorangehenden Ansprüche, wobei die seitlichen Luftzufuhrmittel (6A, 6B) mindestens ein zweites Ventil (13A, 13B) umfassen, das zwischen dem ersten Ventil (8A, 8B) und einem seitlichen Luftauslass (7A, 7B) angeordnet ist, wobei ein Verschließen des zweiten Ventils (13A, 13B) ein Leiten von Luft zum Motor des Kraftfahrzeugs erlaubt.

4. Vorderseite (1) eines Kraftfahrzeugs gemäß Anspruch 3, umfassend mindestens einen seitlichen Lufteinlass (11A, 11B), der zwischen dem ersten Ventil (8A, 8B) und dem zweiten Ventil (13A, 13B) angeordnet ist und ermöglicht, Außenluft des Fahrzeugs direkt in das seitliche Luftzufuhrmittel (6A, 6B) eintreten zu lassen, um einen Ladeluftkühler zu kühlen.

5. Vorderseite (1) eines Kraftfahrzeugs gemäßeinem der Ansprüche 3 oder 4, umfassend mindestens einen seitlichen Lufteinlass (12A, 12B), der zwischen dem zweiten Ventil (13A, 13B) und dem seitlichen Luftauslass (7A, 7B) angeordnet ist und welcher ermöglicht, dass die Außenluft des Fahrzeugs direkt in das seitliche Luftzufuhrmittel (6A, 6B) eintritt, um die Aerodynamik des Fahrzeugs zu verbessern.

6. Vorderseite (1) eines Kraftfahrzeugs nach einem der Ansprüche 1 bis 3, mit mindestens einem seitlichen Lufteinlass (16), durch den die Außenluft direkt in das seitliche Luftzufuhrmittel (6A, 6B) eindringen kann, wobei der Lufteinlass (16) mit einer Schaufel (17) versehen ist, um eine ausgewählte Menge an Luft in Richtung auf den seitlichen Luftauslass (7A) oder zum Ladeluftkühler zu leiten.

7. Vorderseite (1) eines Kraftfahrzeugs nach einem der vorhergehenden Ansprüche, wobei das zentrale Luftzufuhrmittel (5) und das seitliche Luftzufuhrmittel (6A, 6B) zwei Kunststoffteile bilden, welche so aneinander befestigt sind, dass an der Verbindung Leckagen von Luft vermieden werden.

8. Vorderseite (1) eines Kraftfahrzeugs nach einem der Ansprüche 1 bis 6, wobei das zentrale Luftzufuhrmittel (5) und das seitliche Luftzufuhrmittel (6A, 6B) ein Stück Plastikmaterial bilden.

9. Vorderseite eines Kraftfahrzeugs (1) nach einem der vorhergehenden Ansprüche, wobei das zentrale Luftzufuhrmittel (5) und/oder das seitliche Luftzufuhrmittel (6A, 6B) Kasten bilden.

10. Vorderfläche (1) eines Kraftfahrzeugs nach Anspruch 9, umfassend eine Haut (2), welche ausgebildet ist, von der Außenseite des Fahrzeugs sichtbar zu sein, und wobei mindestens ein Kasten (5, 6A, 6B) mittels der Innenwand der Haut (2) geschlossen ist.

11. Fahrzeug, aufweisend eine Vorderfläche eines Kraftfahrzeugs gemäß einem der vorangehenden Ansprüche.

## Claims

1. Motor vehicle front surface (1) comprising a central air-moving means (5), the central air-moving means (5) being connected laterally to at least one side air-moving means (6A, 6B) leading air from a central part of the front surface (1) towards at least one side part (7A, 7B, CAC) of the vehicle, the front surface (1) comprising at least one valve (8A, 8B) between the central air-moving means (5) and the side air-moving means (6A, 6B), making it possible to adjust the air flow circulating between the central air-moving means (5) and the side air-moving means (6A, 6B), **characterised in that** the front surface is such that said central air-moving means (5) is provided with a shutter (10) to prevent the air which entered through a central air inlet (3) from leaving the central air-moving means (5) towards the vehicle engine, and **in that**, when the first valve (8A, 8B) is closed, the shutter (10) is open, and vice versa, when the first valve (8A, 8B) is open, the shutter (10) is closed.

2. Front surface (1) according to claim 1, wherein the first valve (8A, 8B) is located at the intersection between the central air-moving means (5) and the side air-moving means (6A, 6B), so that when the first valve (8A, 8B) is closed, air from the central air-moving means (5) cannot enter the side air-moving means (6A, 6B).

3. Front surface (1) according to one of the preceding claims, wherein the side air-moving means (6A, 6B) comprises at least a second valve (13A, 13B), located between the first valve (8A, 8B) and a side air outlet (7A, 7B), air being directed towards the vehicle engine when the second valve (13A, 13B) is closed.

4. Front surface (1) according to claim 3, comprising at least one side air inlet (11A, 11B) located between the first valve (8A, 8B) and the second valve (13A, 13B), and allowing air from outside the vehicle to enter the side air-moving means (6A, 6B) directly to cool an charge air cooler.

5. Front surface (1) according to claim 3 or 4, comprising at least one side air inlet (12A, 12B) located between the second valve (13A, 13B) and the side air outlet (7A, 7B), and allowing air from outside the vehicle to enter the side air-moving means (6A, 6B) directly to improve the vehicle aerodynamics.

6. Front surface (1) according to one of claims 1 to 3, comprising at least one side air inlet (16) allowing air from outside the vehicle to enter the side air-moving means (6A, 6B) directly, said inlet (16) being provided with a scoop (17) to direct a chosen quantity of air towards the vehicle side air outlet (7A), or towards the charge air cooler.

7. Front surface (1) according to one of the preceding claims, wherein the central air-moving means (5) and the side air-moving means (6A, 6B) form two plastic parts attached to each other so as to avoid any air leaks at the junction.

8. Front surface (1) according to one of claims 1 to 6, wherein the central air-moving means (5) and the side air-moving means (6A, 6B) form the same plastic part.

9. Front surface (1) according to one of the preceding claims, wherein the central air-moving means (5) and/or the side air-moving means (6A, 6B) form boxes.

10. Front surface (1) according to claim 9, comprising a skin (2) intended to be visible from outside the vehicle, and in which at least one box (5, 6A, 6B) is closed by means of the inner wall of the skin (2).

11. Vehicle comprising a front surface (1) according to one of the preceding claims.
